# EUROPEAN PATENT APPLICATION

(11) **EP 2 164 047 A1**
(43) Date of publication of application: **17.03.2010**
(21) Application number: 08704447.5
(22) Date of filing: 05.02.2008
(51) Int. Cl.: G06T 15/60, A63F 13/00

(54) **IMAGE PROCESSOR, IMAGE PROCESSING METHOD, PROGRAM, AND INFORMATION STORAGE MEDIUM**

(30) Priority: 05.06.2007 JP 2007149334
(71) Applicant: Konami Digital Entertainment Co., Ltd., Tokyo 107-8324 (JP)
(72) Inventor: HATSUMI, Naoya, Tokyo 107-8324 (JP); NAGAI, Toru, Tokyo 107-8324 (JP); KONDA, Tomoki, Tokyo 107-8324 (JP)
(74) Representative: Röss, Walter Josef Alfred
(86) International application number: PCT/JP2008/051820
(87) International publication number: WO 2008/149576

(57) **Abstract**

There is provided an image processor that displays a shadow caused by an eyelid or the like on an eye of a character object without causing an unnatural feeling to a user while suppressing an increase of processing load. In the present invention, a shadow polygon (60) for representing a shadow occurring in an eye region (50) of a character object (player character object (46)) that is placed in a virtual three-dimensional space is placed at a position so as to cover at least a part of the eye region (50). Then, an image representing a scene of the virtual three-dimensional space that is viewed from a certain point of view is generated.

## Description

### TECHNICAL FIELD

The present invention relates to an image processor, an image processing method, a program, and an information storage medium.

### BACKGROUND ART

An image processor that displays an image representing a scene of a virtual three-dimensional space in which a character object is placed, which is viewed from a certain point of view, is known. For example, a game apparatus (an image processor) that realizes a soccer game by displaying an image of a scene viewed from a certain point of view in a virtual three-dimensional space in which a player character object representing a soccer player is placed.
[Patent Document] JP 2005-342120 A

### DISCLOSURE OF THE INVENTION

### Problems to be Solved by the Invention

In the above-described image processor, when a shadow caused by an eyelid or the like is not displayed on the eye of the character object, the character object appears with the eye shining excessively. As a result, an unnatural feeling is caused to the user.

As a method of displaying a shadow caused by an eyelid or the like on the eye of the character object, a method for drawing the shadow caused by the eyelid or the like in advance on a texture image that represents the eye may be considered. However, in this case, when the animation data representing the movement of the eyeball is replayed, the shadow will move together with the eyeball. As a result, such a method may cause a further unnatural feeling to the user.

As another method of displaying the shadow caused by the eyelid or the like on the eye of the character object, a method using a physical simulation calculation to draw the shadow caused by the eyelid or the like may be considered. However, in this case, the processing load is increased.

The present invention was conceived in view of the above-described problems, and the purpose of the present invention is to realize an image processor, an image processing method, a program, and an information storage medium that can display a shadow caused by an eyelid or the like on an eye of a character object without causing an unnatural feeling to a user while suppressing an increase of the processing load.

### Means for Solving the Problems

In order to solve at least one of the problems as described above, one aspect of the present invention is an image processor including a shadow polygon placing unit configured to place a shadow polygon at a position so as to cover at least a part of an eye region of a character object. The shadow polygon represents a shadow occurring in the eye region of the character object placed in a virtual three-dimensional space. The image processor also includes an image generating unit configured to generate an image representing a scene of the virtual three-dimensional space that is viewed from a certain point of view.

One aspect of the present invention is an image processing method including a shadow polygon placing step for placing a shadow polygon at a position so as to cover at least a part of an eye region of a character object. The shadow polygon represents a shadow occurring in the eye region of the character object placed in a virtual three-dimensional space. Also, the image processing method includes an image generating step for generating an image representing a scene of the virtual three-dimensional space that is viewed from a certain point of view.

One aspect of the present invention is a program which, when executed, causes a computer such as a home game machine, a portable game machine, a commercial game machine, a portable phone, a personal digital assistant (PDA), and a personal computer to function as a shadow polygon placing unit configured to place a shadow polygon at a position so as to cover at least a part of an eye region of a character object. The shadow polygon represents a shadow occurring in the eye region of the character object that is placed in a virtual three-dimensional space. Also, the program which, when executed, causes the computer to function as an image generating unit configured to generate an image representing a scene of the virtual three-dimensional space that is viewed from a certain point of view.

One aspect of the present invention is a computer-readable information storage medium that stores the program. One aspect of the present invention is a program distribution device that includes an information storage medium storing the program, reads the program from the information storage medium, and distributes the program. One aspect of the present invention is a program distributing method for reading the program from an information storage medium that stores the program, and for distributing.

In one or more aspects of the present invention, a shadow polygon for representing a shadow occurring in an eye region of a character object that is placed in a virtual three-dimensional space is placed at a position so as to cover at least a part of the eye region. An image representing a scene of the virtual three-dimensional space that is viewed from a certain point of view is generated. Thus, it is possible to display the shadow caused by the eyelid or the like on an eye of the character object without causing an unnatural feeling to the user while suppressing an increase of the processing load.

In one aspect of the present invention, the image processor may further include an eye region shape controlling unit configured to change a shape of the eye region. The shadow polygon placing unit may include a unit configured to change a shape of the shadow polygon based on a change of a shape of the eye region.

In one aspect of the present invention, the shadow polygon placing unit may include a unit configured to acquire a direction and an amount of change of a position of a vertex of the eye region. The shadow polygon placing unit may change a position of a vertex of the shadow polygon based on the direction and the amount of change of the position of the vertex of the eye region that corresponds to the vertex of the shadow polygon.

In one aspect of the present invention, the shadow occurring in the eye region may be displayed in a region having a distance from an end of the shadow polygon that is less than or equal to a reference distance in the shadow polygon. The shadow polygon placing unit may include a unit configured to change the reference distance based on a size of the eye region.

### BRIEF DESCRIPTION OF THE DRAWINGS

FIG. 1 is a diagram showing a hardware structure of an image processor (game machine) according to one or more embodiments of the present invention.
FIG. 2 is a diagram showing an example of a virtual three-dimensional space.
FIG. 3 is a diagram showing an example of a head portion of a player character object.
FIG. 4 is a diagram showing an example of a shape of an eye region.
FIG. 5 is a diagram showing an example of a shape of an eye region.
FIG. 6 is a diagram showing an example of a shape of an eye region.
FIG. 7 is a diagram showing an example of a shadow polygon.
FIG. 8 is a diagram for explaining a method for acquiring a direction and an amount of change of a position of a vertex of an eye region.
FIG. 9 is a flowchart showing a process executed by a game machine.
FIG. 10 is a diagram for explaining a method for determining a position of a vertex of a shadow polygon.
FIG. 11 is a diagram showing an overall structure of a program distribution system according to the other embodiment of the present invention.

### BEST MODE FOR CARRYING OUT THE INVENTION

One embodiment of the present invention is explained in detail with reference to the drawings as follows. Here, it is explained that one embodiment of the present invention is applied to a game machine that is one form of an image processor. The game machine is realized, for example, by a home game machine, a portable game machine, a portable phone, a personal digital assistant (PDA), and a personal computer. Here, it is explained that the game machine of one embodiment of the present invention is realized by a home game machine.

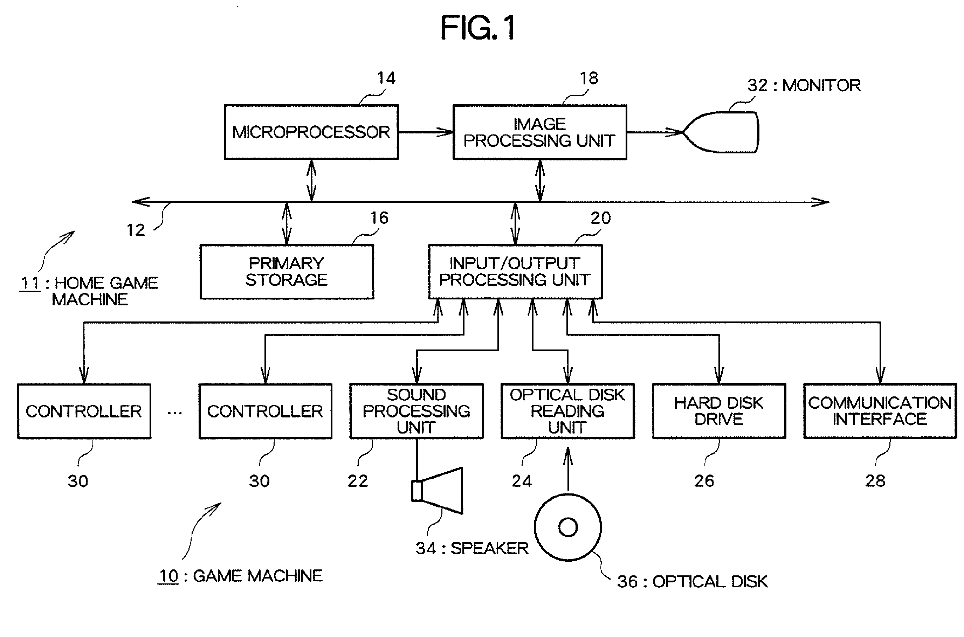

FIG. 1 is a diagram showing an overall structure of a game machine according to one ormore embodiments of the present invention. A game machine 10 shown in FIG. 1 includes a home game machine 11, a monitor 32, a speaker 34, and an optical disk 36. The monitor 32 and the speaker 34 are connected to the home game machine 11. As the monitor 32, for example, a home television receiver is used. As the speaker 34, for example, a speaker built into the home television receiver is used. The optical disk 36 is an information storage medium and is equipped in the home game machine 11.

The home game machine 11 is a known computer game system. The home game machine 11 includes a bus 12, a microprocessor 14, a primary storage 16, an image processing unit 18, an input/output processing unit 20, a sound processing unit 22, an optical disk reading unit 24, a hard disk drive 26, a communication interface 28, and a controller 30. The constituent elements other than the controller 30 are disposed in a housing of the home game machine 11.

The bus 12 exchanges addresses and data among the elements of the home game machine 11. The microprocessor 14, the primary storage 16, the image processing unit 18, and the input/output processing unit 20 are connected using the bus 12 for mutual data communication.

The microprocessor 14 controls the elements of the home game machine 11 based on an operating system stored in a ROM (not shown) and a program and data that are read from the optical disk 36 or the hard disk drive 26. The primary storage 16 includes, for example, a RAM. The program and data read from the optical disk 36 or the hard disk drive 26 are written in the primary storage 16 when it is necessary. The primary storage 16 is also used as a work memory of the microprocessor 14.

The image processing unit 18 includes a VRAM. The image processing unit 18 draws a game screen on the VRAM based on image data sent from the microprocessor 14. The image processing unit 18 converts the game screen into a video signal and outputs the video signal to the monitor 32 at a predetermined timing.

The input/output processing unit 20 is an interface for the microprocessor 14 to access the sound processing unit 22, the optical disk reading unit 24, the hard disk drive 26, the communication interface 28, and the controller 30. The sound processing unit 22, the optical disk reading unit 24, the hard disk drive 26, the communication interface 28, and the controller 30 are connected to the input/output processing unit 20.

The sound processing unit 22 includes a sound buffer. Various sound data such as game music, game sound effects, and messages that are read from the optical disk 36 or the hard disk drive 26 are stored in the sound buffer. The sound processing unit 22 replays various sound data stored in the sound buffer and outputs from the speaker 34.

The optical disk reading unit 24 reads the program and data recorded on the optical disk 36 according to an instruction from the microprocessor 14. In this configuration, the optical disk 36 is used for supplying the program and data to the home game machine 11, but it is also possible to supply the program and data to the home game machine 11 using any other information storage media such as a ROM card. In addition, the program and data may be supplied to the home game machine 11 from a remote location through a communication network such as the Internet.

The hard disk drive 26 is a typical hard disk drive device (auxiliary storage device). The hard disk drive 26 stores program and data. For example, saved data or the like are stored in the hard disk drive 26. The communication interface 28 is an interface for connecting the home game machine 11 in either a wired or wireless manner to a communication network such as the Internet.

The controller 30 is a general-purpose operation inputting unit through which the user inputs various game operations. The input/output processing unit 20 periodically scans states of the elements of the controller 30 every certain period (for example, every 1/60^{th} of a second). The input/output processing unit 20 sends an operation signal indicating the scan result through the bus 12 to the microprocessor 14. The microprocessor 14 determines the game operation of the user based on the operation signal. A plurality of controllers 30 can be connected to the home game machine 11. The microprocessor 14 executes game control based on the operation signal that is input from the controllers 30.

In the game machine 10 having the above-described structure, a game program that is read from the optical disk 36 or the hard disk drive 26 is executed so that a game, for example, a soccer game, is realized.

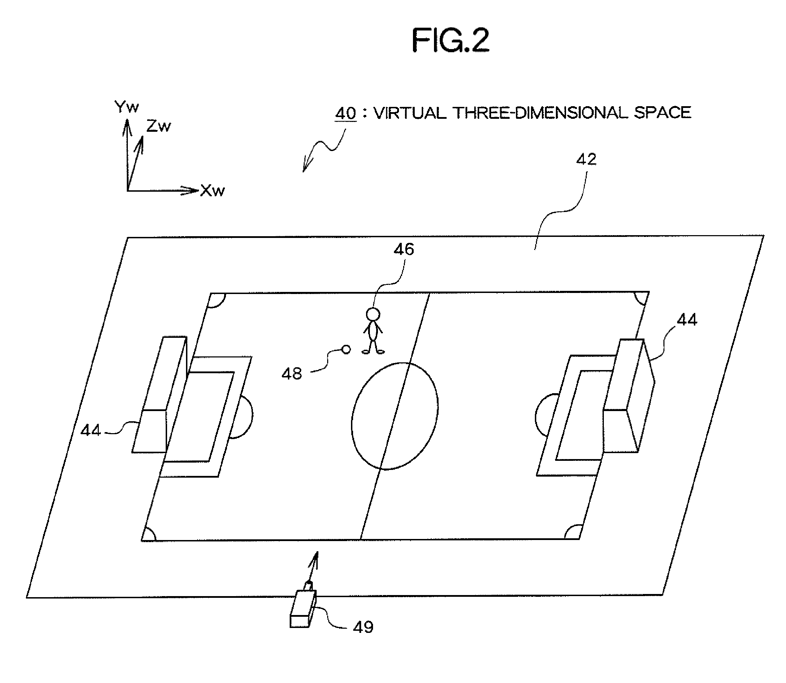

A virtual three-dimensional space is constructed in the primary storage 16 of the game machine 10. FIG. 2 shows an example of a virtual three-dimensional space 40. As shown in FIG. 2, in the virtual three-dimensional space 40, a soccer playing field is formed. That is, a field object 42 that represents a soccer field is placed in the virtual three-dimensional space 40. On the field object 42, a goal object 44 that represents a goal, a player character object 46 that represents a soccer player, and a ball object 48 that represents a soccer ball are placed. 22 player character objects 46 are placed in the virtual three-dimensional space 40, which is not shown in FIG. 2. In addition, in FIG. 2, the player character object 46 is simplified.

A virtual camera 49 is placed in the virtual three-dimensional space 40. A game screen representing a scene of the virtual three-dimensional space 40 that is viewed from the virtual camera 49 is displayed on the monitor 32. The user operates the player character object 46 to be operated using the controller 30 while viewing the game screen.

A technique to preferably realize displaying a shadow that is caused by an eyelid or the like on an eye of the player character object 46 in the soccer game is explained as follows.

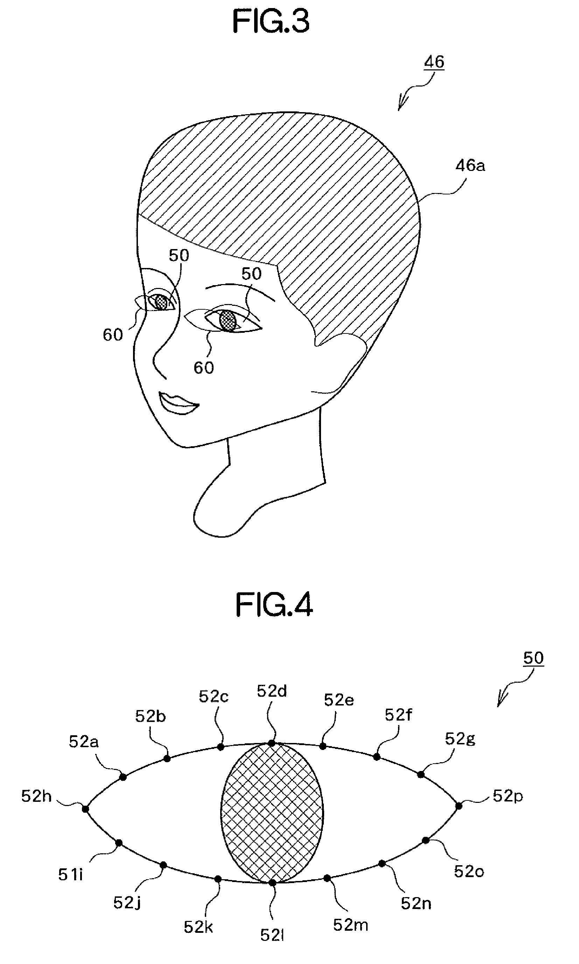

FIG. 3 shows an example of a head portion 46a of the player character object 46. As shown in FIG. 3, the head portion 46a of the player character object 46 includes two eye regions 50 that respectively correspond to the right eye and the left eye of the player character object 46.

The player character object 46 executes blinking of the eyes according to motion data (blink motion data) stored in the optical disk 36 or the hard disk drive 26. The blink motion data are data defining a change in position at a predetermined period (for example, every 1/60^{th} of a second) of each vertex of the eye region 50 when the player character object 46 blinks the eyes. By changing the positions of the vertices of the eye region 50 according to the blink motion data, a scene that shows the player character object 46 blinking the eye is displayed on the game screen.

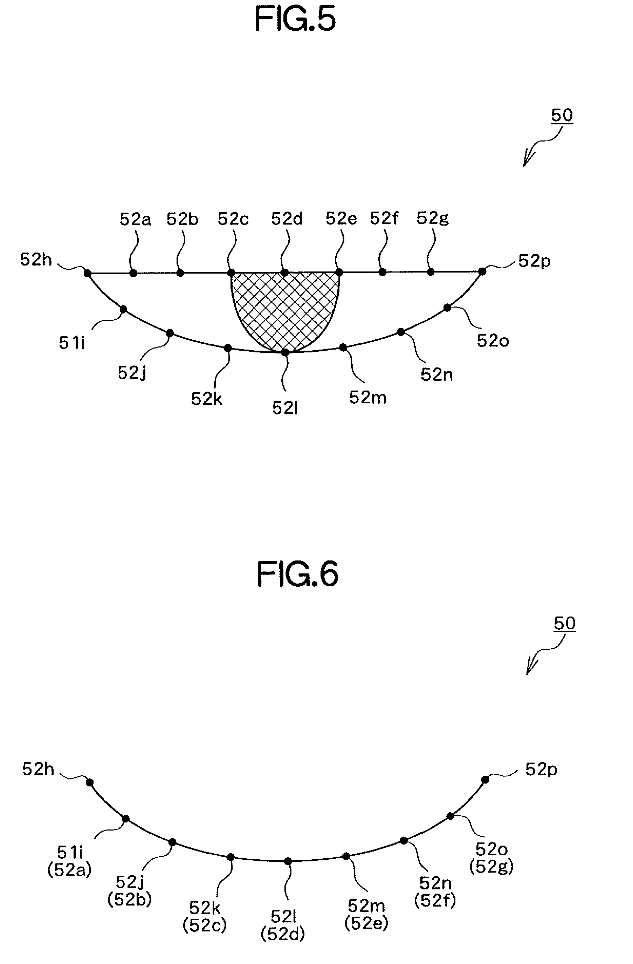

FIGs. 4 - 6 show an example of a change of position of the vertex of the eye region 50, that is, a change of shape of the eye region 50. As shown in FIGs. 4-6, the eye region 50 includes vertices 52a - 52p. FIG. 4 shows a state where the eye (eye region 50) of the player character object 46 is completely opened. FIG. 5 shows a state where the eye (eye region 50) of the player character object 46 is closed halfway. FIG. 6 shows a state where the eye (eye region 50) of the player character object 46 is completely closed. In the following description, the state shown in FIG. 4 is referred to as an initial state.

When the player character object 46 blinks the eye, first, the positions of the vertices (vertices 52a - 52p) of the eye region 50 change from the state shown in FIG. 4 to the state shown in FIG. 5. Then, the positions of the vertices (vertices 52a - 52p, etc.) of the eye region 50 change from the state shown in FIG. 5 to the state shown in FIG. 6. Next, the positions of the vertices (vertices 52a - 52p, etc.) of the eye region 50 change from the state shown in FIG. 6 to the state shown in FIG. 5. Finally, the positions of the vertices (vertices 52a - 52p, etc) of the eye region 50 change from the state shown in FIG. 5 to the state shown in FIG. 4. Such changes of positions of the vertices of the eye region 50 are defined in the blink motion data.

As shown in FIG. 3, a shadow polygon 60 that represents a shadow caused by the eyelid or the like is placed at a position so as to cover at least a part of the eye region 50 over each eye region 50 of the player character object 46. In the case of the present embodiment, the shadow polygon 60 having the same shape as the eye region 50 is placed in front of the eye region 50 of the player character object 46. The shadow polygon 60 is placed at a position having a certain relative positional relationship to the eye region 50 and follows the player character object 46.

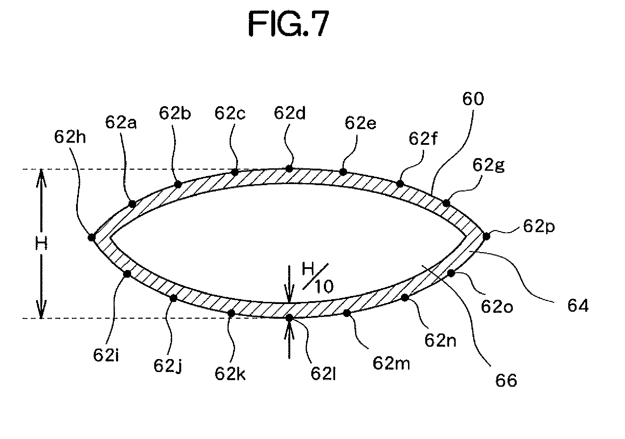

FIG. 7 is a diagram showing the shadow polygon 60. The shadow polygon 60 is a semi-transparent and plate-shaped polygon and has vertices similar to the eye region 50. As shown in FIG. 7, the shadow polygon 60 includes vertices 62a - 62p that respectively correspond to vertices 52a - 52p of the eye region 50. The shadow polygon 60 includes a shadow region 64 (the portion shown by diagonal lines) that represents a shadow caused by the eyelid or the like and a non-shadow region 66. The shadow region 64 is set in a region having a distance from an end of the shadow polygon 60 that is less than or equal to a reference distance. In the present embodiment, the reference distance is set as (H/10). In addition, H represents a height of the shadow polygon 60. In the shadow region 64, a color that represents the shadow is set. A transparency (α value) of the non-shadow region 66 that is a region other than the shadow region 64 is set as completely transparent, and the transparency (α value) of the shadow region 64 is set as a predetermined transparency that is lower than the transparency of the non-shadow region 66. In addition, the shape of the shadow polygon 60 changes according to the change of the shape of the eye region 50 that corresponds to the shadow polygon 60. For example, the shape of the shadow polygon 60 that is placed in front of the eye region 50 of the right eye of the player character object 46 to cover the eye region 50 changes according to the change of the shape of the eye region 50 of the right eye.

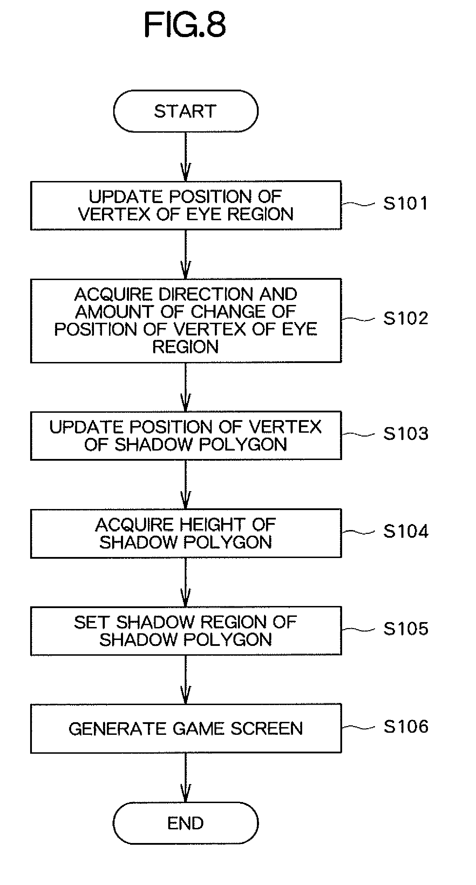

Next, a process executed for realizing the scene of the player character object 46 that blinks the eye is explained as follows. FIG. 8 is a flowchart mainly showing the processes related to the present invention, among the processes periodically executed at a predetermined period (for example, every 1/60^{th} of a second) for describing the scene of the player character object 46 that blinks the eye. The microprocessor 14 executes the process shown in FIG. 8 according to the program that is read from the optical disk 36 or the hard disk drive 26.

As shown in FIG. 8, the microprocessor 14 (eye region shape controlling unit) updates the positions of the vertices (vertices 52a - 52p, etc.) of the eye region 50 of the player character object 46 based on the blink motion data (S101). Then, the microprocessor 14 (shadow polygon placing unit) acquires each direction and each amount of change of each position of the vertices (vertices 52a - 52p, etc.) of the eye region 50 of the player character object 46 (S102).

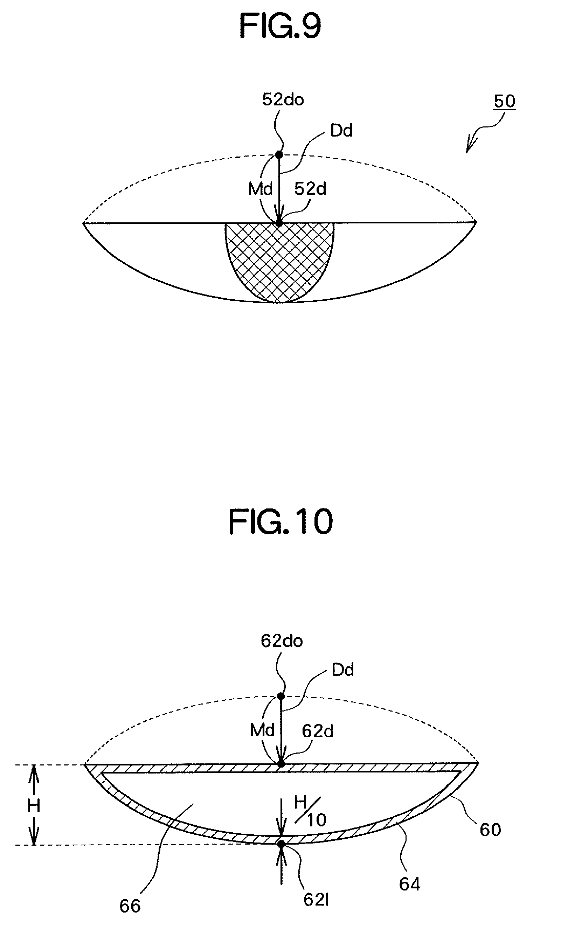

FIG. 9 is a diagram for explaining directions and amounts of changes of the positions of the vertices (vertices 52a - 52p, etc.) of the eye region 50. FIG. 9 shows a case where a direction of change Dd of the position of the vertex 52d and an amount of change Md of the position of the vertex 52d are calculated. In FIG. 9, the reference numeral 52do represents an initial position of the vertex 52d. The initial position of the vertex 52d is the position of the vertex 52d when the eye region 50 is in the initial state (refer to FIG. 4).

As shown in FIG. 9, the direction from the initial position 52do of the vertex 52d to the current position of the vertex 52d is acquired as the direction of change Dd of the position of the vertex 52d. A distance from the initial position 52do of the vertex 52d to the current position of the vertex 52d is acquired as the amount of change Md of the position of the vertex 52d. In S102, the other directions and amounts of change of the positions of the vertices of the eye region 50 are acquired in a manner similar to that for the vertex 52d. For example, the direction from the initial position of the vertex 52b to the current position of the vertex 52b is acquired as the direction of change of the position of the vertex 52b, and the distance from the initial position of the vertex 52b to the current position of the vertex 52b is acquired as the amount of change of the position of the vertex 52b.

After acquiring the directions and amounts of changes of the positions of the vertices (vertices 52a - 52p, etc.) of the eye region 50 of the player character object 46, the microprocessor 14 (shadow polygon placing unit) updates the positions of the vertices (vertices 62a - 62p, etc.) of the shadow polygon 60 based on the directions and the amounts of changes of the positions of the vertices (vertices 52a - 52p, etc.) of the eye region 50 of the player character object 46 (S103). The microprocessor 14 determines the positions of the vertices (vertices 62a - 62p, etc.) of the shadow polygon 60 based on the directions and amounts of changes of the positions of the vertices of the eye region 50 that corresponds to the vertices of the shadow polygon 60.

FIG. 10 is a diagram for explaining a method of determining the positions of the vertices (vertices 62a - 62p, etc.) of the shadow polygon 60. FIG. 10 shows a case where the position of the vertex 62d of the shadow polygon 60 is determined. The reference numeral 62do in FIG. 10 shows an initial position of the vertex 62d. The initial position of the vertex 62d is the position of the vertex 62d when the shape of the shadow polygon 60 is identical to the shape of the eye region 50 in the initial state (refer to FIG. 4).

As shown in FIG 10, the position of the vertex 62d is determined to be a position that is moved from the initial position 62do of the vertex 62d in the direction of change Dd of the position of the vertex 52d by the amount of change Md of the position of the vertex 52d. In S103, the positions of the vertices of the shadow polygon 60 are determined in a manner similar to that for the vertex 62d. For example, the position of the vertex 62b is determined at a position that is moved from the initial position of the vertex 62b in the direction of change of the position of the vertex 52b by the amount of change of the position of the vertex 52b.

After the positions of the vertices (vertices 62a - 62p, etc.) of the shadow polygon 60 are updated, the microprocessor 14 (shadow polygon placing unit) acquires the height H of the shadow polygon 60 (S104). In the case of the present embodiment, the microprocessor 14 acquires a distance between two representative vertices 62d and 621 of the shadow polygon 60 as the height H of the shadow polygon 60.

Then, the microprocessor 14 (shadow polygon placing unit) sets the shadow region 64 of the shadow polygon 60 based on the height H of the shadow polygon 60 (S105). Here, the microprocessor 14 sets, as the shadow region 64, a region having the distance from an end of the shadow polygon 60 that is less than or equal to (H/10). That is, the microprocessor 14 sets a color of the region having the distance from the end of the shadow polygon 60 that is less than or equal to (H/10) to a predetermined color that represents the shadow. In addition, the microprocessor 14 sets the transparency (α value) of the region having the distance from the end of the shadow polygon 60 that is not less than or equal to (H/10) to become completely transparent. Moreover, the microprocessor 14 sets the transparency (α value) of the region having the distance from the end of the shadow polygon 60 that is less than or equal to (H/10) to become a predetermined transparency that is not completely transparent.

Then, the microprocessor 14 and the image processing unit 18 (image generating unit) generate the game screen (S106). That is, the microprocessor 14 and the image processing unit 18 draw a game screen (image) that represents a scene of the virtual three-dimensional space 40, which is viewed from the virtual camera 49 in the VRAM. The game screen drawn in the VRAM is displayed and output to the monitor 32 at a certain timing.

In the game machine 10, because the game screen is generated as described above, an image in which the shadow polygon 60 (refer to FIGs. 7 and 10) is semi-transparently combined with the eye region 50 of the player character object 46 according to the transparency (ratio of semi-transparent combination) set in S105 is displayed on the game screen. That is, the shadow region 64 of the shadow polygon 60 is semi-transparently combined with the eye region 50 of the player character object 46 shown on the game screen, and therefore, a scene describing that the shadow based on the eyelid and the end of the eye appears at the eye of the player character object 46 is displayed on the game screen.

As a method of displaying a shadow caused by the eyelid or the like on the eye of the player character object 46, drawing the shadow caused by the eyelid or the like in advance on a texture image representing the eye may be considered. However, in this case, when the animation data representing the movement of the eyeball is replayed, the shadow will move together with the eyeball. As a result, the method may cause a further unnatural feeling to the user. In the present embodiment, on the other hand, even when the animation data representing the movement of the eyeball is replayed, the shadow does not move together with the eyeball, and thus, it is possible to prevent the user from feeling the unnatural feeling.

As another method of displaying the shadow caused by the eyelid or the like on the eye of the character object, using physical simulation calculation to draw the shadow caused by the eyelid or the like may be considered. However, in this case, the processing load is increased. In the present embodiment, on the other hand, because the shadow caused by the eyelid or the like is not drawn by an execution of the physical simulation calculation, increase in the processing load can be suppressed.

As explained above, the game machine 10 can realize that the shadow caused by the eyelid or the like can be displayed on the eye of the character object without causing an unnatural feeling to the user while suppressing increase in the processing load.

Further, in the game machine 10, the shape of the shadow polygon 60 changes according to the change of the shape of the eye region 50 that corresponds to the shadow polygon 60. If the shape of the shadow polygon 60 is a constant shape, when the player character object 46 blinks the eye (when the shape of the eye region 50 of the player character object 46 changes), there is a possibility that the shadow polygon 60 (shadow region 64) will be semi-transparently combined with a region other than the eye region 50 of the player character object 46. That is, there is a possibility that the shadow will be displayed in a region other than the eye region 50 of the player character object 46, resulting in a possible unnatural feeling of the user. In the game machine 10, on the other hand, it is possible to avoid such a disadvantage.

Moreover, in the game machine 10, the size (width) of the shadow region 64 of the shadow polygon 60 is set based on the size (height) of the shadow polygon 60. If the size (width) of the shadow region 64 of the shadow polygon 60 is constant, when the size of the shadow polygon 60 becomes relatively small, the ratio of the region in the eye region 50 of the player character object 46, in which the shadow caused by the eyelid or the like is displayed, may become too large so that the user may feel unnaturally. In the game machine 10, on the other hand, it is possible to avoid such a disadvantage.

The present invention is not limited to the above-described preferred embodiment.

For example, in S102 of FIG. 8, a direction and a distance from a previous position of a vertex (position before update in S101) to the current position of the vertex may be acquired as the direction and the amount of change of each of the positions of the vertices of the eye region 50. In this case, in S103 of FIG. 8, the vertices of the shadow polygon 60 are updated to positions moved from the current positions of the vertices in the directions of change of the vertices of the eye region 50 that corresponds to the vertices of the shadow polygon 60 by the amounts of change of the vertices of the eye region 50 that corresponds to the vertices of the shadow polygon 60.

Further, for example, the game executed by the game machine 10 may be a game that is different from the soccer game. Moreover, the present invention may be applied, for example, to an image processor other than the game machine 10. The present invention can be employed for representing a scene in which a shadow caused by an eyelid or the like occurs on an eye of a character object in an image processor that displays a screen having a character object.

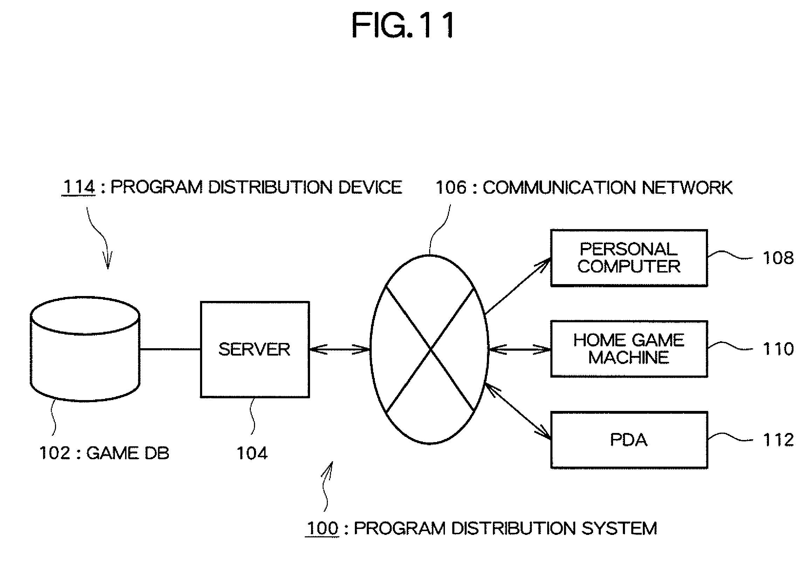

Moreover, for example, in the above explanation, the program is supplied from the optical disk 36, which is an information storage medium, to the home game machine 11. However, the program may be distributed to the home or the like through a communication network. FIG. 11 is a diagram showing an overall structure of a program distribution system that uses a communication network. With reference to FIG. 11, a program distribution method according to the present invention is explained. As shown in FIG. 11, a program distribution system 100 includes a game database 102, a server 104, a communication network 106, a personal computer 108, a home game machine 110, and a PDA (Personal Digital Assistant) 112. Of these, the game database 102 and the server 104 form a program distribution device 114. The communication network 106 includes, for example, the Internet and a cable television network. In this system, the game database (information storage medium) 102 stores a program that is similar to the stored content of the optical disk 36. When the demander requests distribution of a game using the personal computer 108, the home game machine 110, the PDA 112, or the like, the request is transmitted through the communication network 106 to the server 104. The server 104 reads the program from the game database 102 in response to the game distribution request and transmits the program to the game distribution requesting device such as the personal computer 108, the home game machine 110, the PDA 112, or the like. In the described example, the game is distributed in response to the game distribution request, but it is also possible to transmit the game from the server 104 one way. In addition, it is not always necessary to distribute all the programs that are necessary for realizing the game at once (package distribution), and the necessary portion may be distributed according to the phase of the game (split distribution). By distributing the game via the communication network 106 in this manner, it is possible for the demander to easily obtain the program.

## Claims

1. An image processor comprising:
a shadow polygon placing unit configured to place a shadow polygon at a position so as to cover at least a part of an eye region of a character object, wherein the shadow polygon represents a shadow occurring in the eye region of the character object placed in a virtual three-dimensional space; and
an image generating unit configured to generate an image representing a scene of the virtual three-dimensional space that is viewed from a certain point of view.

2. The image processor according to Claim 1 further comprising an eye region shape controlling unit configured to change a shape of the eye region,
wherein the shadow polygon placing unit further comprises a unit configured to change a shape of the shadow polygon based on a change of a shape of the eye region.

3. The image processor according to Claim 2, wherein
the shadow polygon placing unit further comprises a unit configured to acquire a direction and an amount of change of a position of a vertex of the eye region, and
the shadow polygon placing unit changes a position of a vertex of the shadow polygon based on the direction and the amount of change of the position of the vertex of the eye region that corresponds to the vertex of the shadow polygon.

4. The image processor according to Claim 2 or 3, wherein
the shadow occurring in the eye region is displayed in a region having a distance from an end of the shadow polygon that is less than or equal to a reference distance in the shadow polygon, and
the shadow polygon placing unit further comprises a unit configured to change the reference distance based on a size of the eye region.

5. An image processing method comprising:
a shadow polygon placing step for placing a shadow polygon at a position so as to cover at least a part of an eye region of a character object, wherein the shadow polygon represents a shadow occurring in the eye region of the character object placed in a virtual three-dimensional space; and
an image generating step for generating an image representing a scene of the virtual three-dimensional space that is viewed from a certain point of view.

6. A program which, when executed, causes a computer to function as:
a shadow polygon placing unit configured to place a shadow polygon at a position so as to cover at least a part of an eye region of a character object, wherein the shadow polygon represents a shadow occurring in the eye region of the character object placed in a virtual three-dimensional space; and
an image generating unit configured to generate an image representing a scene of the virtual three-dimensional space that is viewed from a certain point of view.

7. A computer-readable information storage medium which stores a program which, when executed, causes a computer to function as:
a shadow polygon placing unit configured to place a shadow polygon at a position so as to cover at least a part of an eye region of a character object, wherein the shadow polygon placing unit represents a shadow occurring in an eye region of a character object placed in a virtual three-dimensional space,; and
an image generating unit configured to generate an image representing a scene of the virtual three-dimensional space that is viewed from a certain point of view.
